Europäisches Patentamt

European Patent Office

Office européen des brevets

(11) Publication number: **0 008 161**
**B1**

(12) **EUROPEAN PATENT SPECIFICATION**

(45) Date of publication of patent specification: **23.09.81**

(21) Application number: **79301329.3**

(22) Date of filing: **09.07.79**

(51) Int. Cl.³: **B 41 L 1/36, B 41 M 5/00,**
**C 09 J 3/00**

(54) Process of preparing manifold sets and the sets thus obtained.

(30) Priority: **26.07.78 US 928143**

(43) Date of publication of application:
**20.02.80 Bulletin 80/4**

(45) Publication of the grant of the European patent:
**23.09.81 Bulletin 81/38**

(84) Designated Contracting States:
**AT BE CH DE FR GB IT LU NL SE**

(56) References cited:
**FR - A - 2 013 137**
**US - A - 4 009 311**

(73) Proprietor: **APPLETON PAPERS INC.**
**P.O. Box 359**
**Appleton Wisconsin 54912 (US)**

(72) Inventor: **Becker, William Joseph**
**652 East Greenfield Street**
**Appleton, Wisconsin 54911 (US)**

(74) Representative: **Farwell, William Robert et al,**
**PHILLIPS & LEIGH 7 Staple Inn Holborn**
**London WC1V 7QF (GB)**

Courier Press, Leamington Spa, England.

# 0 008 161

## Process of preparing manifold sets and the sets thus obtained

This invention relates to a process of preparing manifold sets from a collated stack of pressure-sensitive carbonless copy paper, and to such sets so prepared.

Pressure-sensitive carbonless copy paper comprises a sheet paper support which contains a colour forming system responsive to the application of pressure. The system employs a substantially colourless colour former, a colour developer capable of reacting with the colour former to generate a colour, and also a solvent in which the colour forming reaction can take place. Until the paper is actually used, the solvent is maintained in isolation from at least one of the colour forming components, and this is achieved by the use of a pressure-rupturable barrier. At the time of use, the application of pressure to the paper, through the agency of, for example, a typewriter key or a writing stylus, ruptures that part of the barrier which is subject to such pressure and releases the solvent or a solvent solution of one of the colour forming components. This in turn allows both colour forming components to be brought into reactive contact and to generate colour in a pattern which exactly corresponds to the pattern of applied pressure. In this way, pressure-sensitive carbonless copy paper can be used to provide copies without the need for any intermediate sheets of carbon paper.

The colour forming components and the solvent can be arranged on the support in a number of ways. Generally, however, the colour developer is coated onto a side of one sheet (the CF sheet) and the colour former is dissolved in the solvent and the resulting solution encapsulated in microcapsules which are then coated onto a side of another sheet (the CB sheet). The two sheets are then assembled with their coatings in contiguous relationship so that, on the application of pressure to the uncoated side of the CB sheet, the colour former solution will be released and transferred to the CF sheet for reaction with the colour developer.

Where more than one copy is required, one or more intermediate sheets are included between the CF and the CB sheets. The intermediate sheets (CFB sheets) have a colour developer coating on one side and a coating of microcapsules on the other and are arranged so that each colour developer coating is contiguous with a microcapsule coating.

For many years, manifold sets of pressure-sensitive carbonless copy paper have been prepared by assembling the paper into a stack in a particular repeating sequence, for example, CB—CF, CB—CF, CB—CF, ...., CB—CF or CB—CFB—CFB— ... —CF, CB—CFB—CFB— ... —CF, ...., CB—CFB—CFB— ... —CF. Then to one side of the collated stack, an edge-padding adhesive composition is applied. The composition is dried and finally the stack is fanned into individual sets each consisting of paper in the required sequence, for example, CB—CF or CB—CFB—CFB— ... —CF.

The successful preparation of such sets is dependent primarily upon the nature of the adhesive composition. In particular, it should be capable of selective adhesion between the edges of the coated sides of the sheets. Thus, when the stack is fanned, separation only occurs between the uncoated sides of the CF and CB sheets.

A number of edge-padding adhesives have been developed for this purpose and some are described in British Patent 1263510 and U.S. Patents 3 960 638, 3 963 553, 3 970 500, 3 970 501 and 4 041 193. On occasion however, some pressure-sensitive carbonless copy paper within the stack will not respond satisfactorily to the application thereto of a prior art edge-padding adhesive. This is especially so when a resin colour developer is used in the CF or CFB sheet and particularly after it has been allowed to age. Adhesion sometimes occurs between sheets having adjacent uncoated sides so that the stack will not fan apart properly (referred to as "blocking"). There may be insufficient adhesion between the edges of the coated sides of the sheets whereby, during fanning, the stack may separate into individual sheets (referred to as "fall-apart"). And there may even be adhesion between sheets having adjacent uncoated sides and insufficient adhesion between the edges of the coated sides of the sheets so that, during fanning, the stack separates at the wrong places (referred to as "reverse padding" in the case of two-part sets).

It is an object of this invention to overcome or at least susbtantially reduce the above-mentioned problems.

The present invention provides a process of preparing manifold sets from a collated stack of pressure-sensitive carbonless copy paper, by applying to a side of the stack an edge-padding adhesive composition containing a latex emulsion and one or more water-miscible organic solvents, drying the adhesive composition, and fanning the stack into individual sets, characterised in that the adhesive composition also contains sodium tetraborate decahydrate.

The use of sodium tetraborate decahydrate (commonly known as borax) in the adhesive composition has been found to impart a considerable improvement to the edge-padding behaviour of pressure-sensitive carbonless copy paper. Indeed, the above-mentioned problems associated with prior art adhesive compositions have been substantially overcome by the process of the present invention.

The amount of borax to be used in the adhesive composition should be sufficient to produce a significantly favourable effect in edge-padding performance but not so high as to affect adversely the adhesive composition itself, for example, by causing it to coagulate or otherwise to change the adhesive properties of the latex. Suitably, the adhesive composition contains from 1.0 to 1.5%, preferably from 1.1 to 1.3% by weight of borax.

2

The latex is preferably an acrylic polymer. Normally, the adhesive composition contains from 8 to 17%, preferably from 10 to 13%, by weight of the latex.

Examples of water-miscible organic solvents which can be used in the adhesive composition include ethylene glycol monomethyl ether and denatured alcohol. Preferably a mixture of these solvents is used. Normally, the adhesive composition contains from 20 to 30%, by weight of water-miscible organic solvents.

The adhesive composition for use in the present invention is prepared by formulating a conventional edge-padding latex-emulsion in one or more water-miscible organic solvents, and adding the borax to the composition just prior to the application thereof to a side of the stack. Advantageously, the borax is added as an aqueous solution.

In accordance with another aspect of the present invention there is provided a manifold set of pressure-sensitive carbonless copy paper in which the edges on one side of the set are adhered together by an edge-padding adhesive compoisition containing a latex emulsion, one or more water-miscible organic solvents, and sodium tetraborate decahydrate.

The present invention can be used with any type of pressure-sensitive carbonless copy paper, but is especially useful for preparing sets in which the CF or CFB sheet contains a resin colour developer. Examples of such colour developers include phenol-formaldehyde polymers, phenol-acetylene polymers, maleic acid-rosin resins, partially or wholly hydrolyzed styrene-maleic anhydride copolymers and ethylene maleic anhydride copolymers, carboxy polymethylene and wholly or partially hydrolyzed vinyl methyl ether maleic anhydride copolymers and mixtures thereof as disclosed in U.S. patent 3 672 935. Particulary useful are the metal-modified phenolic resins as disclosed, for example, in U.S. Patent 3 732 120. Illustrative of a coating composition of such a colour developer is the following:

| Composition Constituent | % by weight |
| --- | --- |
| Zinc-modified phenolic polymer | 13.6 |
| Paper coating kaolin | 67.9 |
| Calcium carbonate | 6.0 |
| Styrene-butadiene latex | 6.0 |
| Etherified corn starch | 6.5 |

The invention is not however limited to use with carbonless copy paper employing a resin colour developer but can also be used with paper employing other types of colour developers. Examples of such include clays such as attapulgite, bentonite and montmorillonite, treated clays such as silton as disclosed in U.S. Patents 3 622 364 and 3 753 761, materials such as silica gel, talc, feldspar, magnesium trisilicate, pyrophyllite, zinc sulfate, zinc sulphide, calcium sulphate, calcium citrate, calcium phosphate, calcium fluoride and barium sulphate, aromatic carboxylic acids such as salicylic acid, and derivatives of aromatic carboxylic acids and metal salts thereof as disclosed in U.S. Patent 4 022 936. In fact, any compound which is a Lewis acid, i.e. an electron acceptor can be used as a colour developer.

The nature of the colour former and the solvent is not of importance to the performance of the present invention which is not therefore limited to any particular type thereof. However, as examples of colour formers which may be used, there are mentioned a leuco dye derivative, such as crystal violet lactone, a fluoran derivative, a diphenylamine derivative, a spiropyran derivative or a phthalimidine derivative.

The pressure-rupturable barrier is preferably constituted by microcapsules each containing a solution of the colour former in the solvent. Microencapsulation processes are known in the art, for example U.S. Patents 2 800 457, 3 041 289, 3 533 958, 3 755 190 and 4 001 140, and any of the resulting microcapsules are suitable for coating onto paper to be edge-padded in accordance with the present invention.

The following example illustrates the present invention and enables a comparison to be made with the use of a conventional edge-padding adhesive.

The conventional adhesive was prepared in water according to the following formula:

| Constituent | % by weight |
| --- | --- |
| Acrylic latex solids | 10.6 |
| Ethylene glycol monomethyl ether | 20.0 |
| Denatured alcohol | 8.0 |

This was then applied with a brush to one side of five stacks of collated carbonless copy paper in which the CF, CB and CFB sheets were prepared as follows:

*CF*-p-*t*-octylphenol novolak resin, zinc modified according to the process of U.S. Patent 3 737 410 and dispersed in water with kaolin clay, calcium carbonate, hydroxy ethyl starch and styrene-butadiene latex and coated onto sheet paper with a No. 10 wire-wound coating rod and dried.
*CB*-the colour former solution of line 64, column 6, to line 4, column 7 of U.S. Patent 4 001 140, encapsulated according to the method of example 1 of U.S. Patent 4 001 140 or example 1(A) of U.S. Patent 4 121 013, made up into an aqueous slurry as described in U.S. Patent 4 121 013, and then coated and dried on an air knife coating machine.
*CFB*-as CF on one side and as CB on the other side of one sheet of paper.

The adhesive was dried and then the five stacks were fanned. The results are provided in the table hereunder together with the repeating sequence for the five stacks and the paper base weights for a 1300 sq. feet ream.

This process was then repeated but with the addition of 1.25% by weight, of borax to the adhesive composition just before application thereof to one side of the five stacks. The results are provided in the following table.

| Repeating Sequence of collated Stack | Edge Padding Results | |
| --- | --- | --- |
| | Conventional Adhesive | Conventional Adhesive with Borax |
| 15 lb. CB 17 lb. CFB 17 lb. CFB 15 lb. CF | Blocking | Successful |
| 30 lb. CB 17 lb. CFB 15 lb. CF | Blocking. Reverse Padding CB—CFB very weak bond | Successful |
| 15 lb. CB 17 lb. CFB 15 lb. CF | CB—CFB bond fall-apart | Successful |
| 15 lb. CB 17 lb. CFB(I) 17 lb. CFB(II) 15 lb. CF | CFB(II)—CF bond very weak | Successful |
| 22 lb. CB 15 lb. CF | Reversing Padding | Successful |

Successful edge-padding results mean that there is good adhesion between the edges of the coated sides of the sheets and no adhesion between the edges of the uncoated sides, and that the collated stack separates into the required manifold sets upon fanning.

It is thus apparent from this example the use of borax in the adhesive composition used in the present invention results in a susbtantial improvement in the edge-padding performance of pressure-sensitive carbonless copy paper.

**Claims**

1. A process of preparing manifold sets from a collated stack of pressure-sensitive carbonless copy paper, by applying to a side of the stack an edge-padding adhesive composition containing a latex emulsion and one or more water-miscible organic solvents, drying the adhesive composition, and fanning the stack into individual sets, characterised in that the adhesive composition also contains sodium tetraborate decahydrate.

2. A process according to claim 1, characterized in that the composition contains from 1.0 to 1.5%, by weight, of sodium tetraborate decahydrate.

3. A process according to claim 2, characterized in that the composition contains from 1.1 to

4

1.3%, by weight, of sodium tetraborate decahydrate.

4. A process according to any one of the preceding claims, characterized in that the latex is an acrylic polymer.

5. A process according to any one of the preceding claims, characterized in that the composition contains from 8 to 17%, by weight, of the latex.

6. A process according to claim 5, characterized in that the composition contains from 10 to 13%, by weight of the latex.

7. A process according to any one of the preceding claims, characterized in that the water-miscible organic solvent is a mixture of ethylene glycol monomethyl ether and denatured alcohol.

8. A process according to any one of the preceding claims, characterized in that the composition contains from 20 to 35%, by weight, of water-miscible organic solvent.

9. A process according to claim 8, characterized in that the composition contains from 25 to 30% of water-miscible organic solvent.

10. A process according to any one of the preceding claims, characterized in that the sodium tetraborate decahydrate is added to the composition just prior to the application thereof to a side of the stack.

11. A process according to claim 10, characterized in that the sodium tetraborate decahydrate is added as an aqueous solution thereof.

12. A manifold set of pressure-sensitive carbonless copy paper in which the edges on one side of the set are adhered together by an edge-padding adhesive composition containing a latex emulsion and one or more water-miscible organic solvents, characterized in that the adhesive composition also contains sodium tetraborate decahydrate.

13. A manifold set according to claim 12, characterized in that the CF and CFB sheets of pressure-sensitive carbonless copy paper contain a resin colour developer.

## Revendications

1. Procédé de préparation de liasses duplicatrices à partir d'une pile assemblée de papiers duplicateurs sans carbone sensibles à la pression, par l'application d'un côté de la pile d'une composition adhésive marginale contenant une émulsion de latex et un ou plusieurs solvants organiques miscibles à l'eau, séchage de la composition adhésive et partage de la pile en liasses individuelles, caractérisé en ce que la composition adhésive contient également du tétraborate de sodium décahydraté.

2. Procédé suivant la revendication 1, caractérisé en ce que la composition contient de 1,0 à 1,5% en poids de tétraborate de sodium décahydraté.

3. Procédé suivant la revendication 2, caractérisé en ce que la composition contient de 1,1 à 1,3% en poids de tétraborate de sodium décahydraté.

4. Procédé suivant l'une quelconque des revendications précédentes, caractérisé en ce que le latex est un polymère acrylique.

5. Procédé suivant l'une quelconque des revendications précédentes, caractérisé en ce que la composition contient de 8 à 17% en poids du latex.

6. Procédé suivant la revendication 5, caractérisé en ce que la composition contient de 10 à 13% en poids du latex.

7. Procédé suivant l'une quelconque des revendications précédentes, caractérisé en ce que le solvant organique miscible à l'eau est un mélange d'éther monométhylique d'éthylène-glycol et d'alcool dénaturé.

8. Procédé suivant l'une quelconque des revendications précédentes, caractérisé en ce que la composition contient de 20 à 35% en poids d'un solvant organique miscible à l'eau.

9. Procédé suivant la revendication 8, caractérisé en ce que la composition contient de 25 à 30% d'un solvant organique miscible à l'eau.

10. Procédé suivant l'une quelconque des revendications précédentes, caractérisé en ce que le tétraborate de sodium décahydraté est ajouté à la composition juste avant l'application de cette dernière sur un côté de la pile.

11. Procédé suivant la revendication 10, caractérisé en ce que le tétraborate de sodium décahydraté s'ajoute sous forme d'une solution aqueuse.

12. Liasse duplicatrice de papiers duplicateurs sans carbone sensibles à la pression, caractérisée en ce que les bords d'un côté de la liasse adhèrent les uns aux autres par l'intermédiaire d'une composition adhésive marginale contenant une émulsion de latex et un ou plusieurs solvants organiques miscibles à l'eau, caractérisée en ce que la composition adhésive contient également du tétraborate de sodium décahydraté.

13. Liasse duplicatrice suivant la revendication 12, caractérisée en ce que les feuilles CF et CFB du papier duplicateur sans carbone sensible à la pression contiennent un révélateur de couleur résineux.

## Patentansprüche

1. Verfahren zur Herstellung von Durchschreibpapiersätzen aus einem Stapel von druckempfindlichem kohlefreiem Kopierpapier, bei dem man auf eine Seite des Stapels eine kantenverklebende Masse aus einer Latexemulsion und einem oder mehreren wassermischbaren organischen Lösungsmitteln aufbringt, die Klebemasse trocknen lässt und den Stapel in Einzelsätze auffächert, dadurch gekennzeichnet, dass die Klebemasse zusätzlich Natriumtetraborat-dekahydrat enthält.

2. Verfahren nach Anspruch 1, dadurch gekennzeichnet, dass die Masse 1,0 bis 1,5 Gew.-% an Natriumtetraborat-dekahydrat enthält.

3. Verfahren nach Anspruch 2, dadurch gekennzeichnet, dass die Masse 1,1 bis 1,3 Gew.-% an Natriumtetraborat-dekahydrat enthält.

4. Verfahren nach einem der vorhergehenden Ansprüche, dadurch gekennzeichnet, dass als Latex ein Acrylpolymer vorliegt.

5. Verfahren nach einem der vorhergehenden Ansprüche, dadurch gekennzeichnet, dass die Masse 9 bis 17% Gew.-% Latex enthält.

6. Verfahren nach Anspruch 5, dadurch gekennzeichnet, dass die Masse 10 bis 13 Gew.-% Latex enthält.

7. Verfahren nach einem der vorhergehenden Ansprüche, dadurch gekennzeichnet, dass als wassermischbares organisches Lösungsmittel ein Gemisch aus Aethylenglykolmonomethyläther und vergälltem Alkohol vorliegt.

8. Verfahren nach einem der vorhergehenden Ansprüche, dadurch gekennzeichnet, dass die Masse 20 bis 35 Gew.-% wassermischbares organisches Lösungsmittel enthält.

9. Verfahren nach Anspruch 8, dadurch gekennzeichnet, dass die Masse 25 bis 30% wassermischbares organisches Lösungsmittel enthält.

10. Verfahren nach einem den vorhergehenden Ansprüche, dadurch gekennzeichnet, dass man das Natriumtetraborat-dekahydrat der Masse zusetzt, unmittelbar bevor diese auf eine Seite des Stapels aufgebracht wird.

11. Verfahren nach Anspruch 10, dadurch gekennzeichnet, dass das Natriumtetraborat-dekahydrat in Form seiner wässrigen Lösung vorliegt.

12. Durchschreibpapiersatz aus druckempfindlichem kohlefreiem Kopierpapier, bei dem die Kanten auf einer Seite des Satzes mit einer kantenverklebenden Masse aus einer Latexemulsion und einem oder mehreren wassermischbaren organischen Lösungsmitteln verklebt sind dadurch gekennzeichnet, dass die Klebemasse zusätzlich Natriumtetraborat-dekahydrat enthält.

13. Durchschreibpapiersatz nach Anspruch 12, dadurch gekennzeichnet, dass die Farbbildner- und Farbbildner/Mikrokapselbögen des druckempfindlichen kohlefreien Kopierpapiers einen Harz-Farbentwickler enthalten.